(19) **Europäisches Patentamt / European Patent Office / Office européen des brevets**

(11) **EP 2 708 860 B1**

(12) **EUROPEAN PATENT SPECIFICATION**

(45) Date of publication and mention
of the grant of the patent:
**02.11.2016 Bulletin 2016/44**

(21) Application number: **12785096.4**

(22) Date of filing: **07.02.2012**

(51) Int Cl.:
*G01L 19/06* (2006.01)      *G01H 11/08* (2006.01)
*G10K 9/22* (2006.01)       *G01L 19/14* (2006.01)
*G01L 23/22* (2006.01)      *G01M 15/04* (2006.01)

(86) International application number:
**PCT/JP2012/000796**

(87) International publication number:
**WO 2012/157153 (22.11.2012 Gazette 2012/47)**

(54) **KNOCKING SENSOR**

KLOPFSENSOR

CAPTEUR DE COGNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2011 JP 2011108393**

(43) Date of publication of application:
**19.03.2014 Bulletin 2014/12**

(73) Proprietor: **NGK Spark Plug Co., Ltd.**
**Nagoya-shi**
**Aichi 467-8525 (JP)**

(72) Inventors:
• **KUNO, Hiroyuki**
**Nagoya-shi**
**Aichi 467-8525 (JP)**
• **AOI, Katsuki**
**Nagoya-shi**
**Aichi 467-8525 (JP)**

(74) Representative: **Grünecker Patent- und
Rechtsanwälte
PartG mbB
Leopoldstraße 4
80802 München (DE)**

(56) References cited:
JP-A- 1 262 336          JP-A- 2003 322 580
JP-A- 2004 251 792       JP-A- 2004 251 792
JP-A- 2005 249 601       JP-A- 2008 128 917
JP-A- 2008 144 677       JP-A- 2010 267 526
JP-A- 2010 271 321       US-A1- 2005 115 328
US-A1- 2005 274 189

• 'Kagaku Binran Kiso Hen' THE CHEMICAL
SOCIETY OF JAPAN vol. 5TH, 20 February 2004,
pages I-715 - I-717, XP008172123

**EP 2 708 860 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present invention relates to a knocking sensor using a piezoelectric element.

## Background Art

A knocking sensor which detects a knocking phenomenon is mounted on an internal combustion engine in an automobile or the like. A control for suppressing an occurrence of the knocking phenomenon is performed in accordance with a detection signal output from the knocking sensor. Specifically, a retard control in which an ignition timing of a spark plug in an internal combustion engine is changed in accordance with an output signal of the knocking sensor is performed.

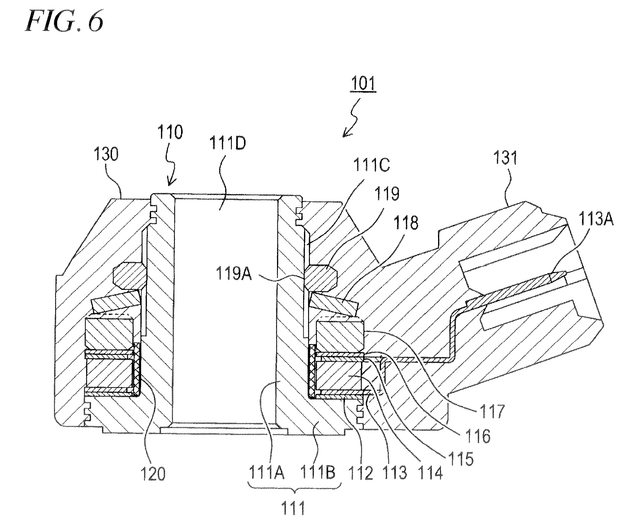

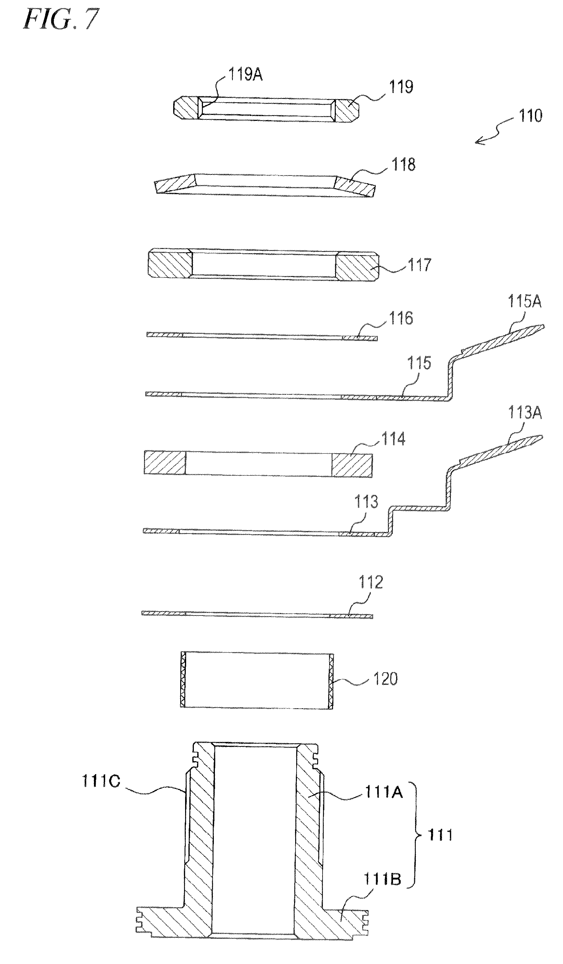

As a knocking sensor of the above-described kind, various configurations have been proposed. Among such knocking sensors, a knocking sensor having a configuration shown in Figs. 6 and 7 is known (for example, see Patent References 1 and 2). The knocking sensor 101 is to be mounted on a cylinder block which is one of components constituting an internal combustion engine. The knocking sensor is a so-called center-hole type non-resonance knocking sensor in which a mounting hole 111D that is used when the knocking sensor 101 is mounted on a cylinder block is formed in a center portion of the sensor.

As shown in the exploded view of Fig. 7, the knocking sensor 101 mainly has: a metal shell 111 having a tubular portion 111 A and a flange portion 111B which is formed in the lower end of the tubular portion 111A. Further, the knocking sensor 101 mainly has an lower insulating plate 112, a lower electrode plate 113, a piezoelectric element 114, an upper electrode plate 115, an upper insulating plate 116, a weight 117, and a disc spring 118, each of which are formed in an annular shape. Onto an outer circumference of the tubular portion 111A, the lower insulating plate 112, the lower electrode plate 113, the piezoelectric element 114, the upper electrode plate 115, the upper insulating plate 116, the weight 117, and the disc spring 118 are sequentially fitted in this order from the side of the flange portion 111B.

An upper terminal 115A and a lower terminal 113A from which a voltage is to be taken out are disposed to extend in a piece-like shape toward the radially outward side. respectively, at radially outward end potions of the lower electrode plate 113 and the upper electrode plate 115. An external thread portion 111C is formed on the upper side of the outer circumferential surface of the tubular portion 111A. By contrast, an internal thread portion 119A adapted to mate with the external thread portion 111C is formed on the inner surface of a nut 119. When the internal thread portion 119A of the nut 119 mates with the external thread portion 111C of the tubular portion 111A, the nut 119 advances toward the flange portion 111B and the stacked member ranging from the lower insulating plate 112 to the disc spring 118 is pressed by the nut 119 against the flange portion 111B to be fixed thereto (see Fig. 6). The thus configured sensor body 110 is covered by a resin molded body 130, thereby configuring the knocking sensor 101.

The knocking sensor 101 having the above-described configuration is attached so that the lower surface of the flange portion 111B of the metal shell 111 is in contact with a cylinder block, and is used in this state. Therefore, the metal shell 111 of the knocking sensor 101 is electrically connected (comes into contact) with the cylinder block, and as a result also the weight 117 which is electrically connected through the metal shell 111, the nut 119. and the disc spring 118 is electrically connected (comes into contact) with the cylinder block through the metal shell 111.

In the knocking sensor 101, therefore, the lower insulating plate 112 is disposed as a component which electrically insulates the flange portion 111B of the metal shell 111 from the lower insulating plate 112, and the upper insulating plate 116 is disposed as a component which electrically insulates the upper electrode plate 115 from the weight 117. Accordingly, insulation between the piezoelectric element 114 and the metal shell 111 and insulation between the piezoelectric element 114 and the weight 117 are ensured. A cylindrical insulation sleeve 120 is fitted between the outer circumferential surface of the tubular portion 111A. and the lower electrode plate 113, the piezoelectric element 114, and the upper electrode plate 115. The insulation sleeve 120 prevents the lower electrode plate 113, the piezoelectric element 114, and the upper electrode plate 115 from being electrically connected with the tubular portion 111A.

Furthermore Patent Refence 3 discloses a similar knocking sensor wherein the lower and upper insulating plates 5 are made of polyphenylene sulfide (PPS) resin, that is a resin which does not contain ester bonds.

## Prior Art Reference

## Patent Reference

Patent Reference 1: JP-A-2003-322580
Patent Reference 2: JP-A-2008-144677
Patent Reference 3: JP-A-2004-251792

## Summary of the Invention

## Problems that the Invention is to Solve

As the resin molded body 130 which covers the sensor body 110 of the above-described knocking sensor 101, usually, a product formed from a polyimide resin such as nylon is used. The operating temperature of the knocking sensor 101 is about 130°C. In order to improve the fuel consumption of an engine which is an internal combustion engine, recently, the tendency to operate the engine at a high temperature has been increased. The temperature of the knocking sensor 101 rises when the knocking sensor 101 is in contact with a cylinder block of an engine. Therefore, it is requested to raise its operating temperature to 150°C or higher.

In the case of the knocking sensor 101 having the resin molded body 130 made of a conventional polyimide resin, however, there is a problem in that the insulation resistance is lowered at a high temperature of 150°C or higher. According to the study of the inventors, here, it was found that the insulation resistance of the knocking sensor 101 depends on the surface resistance of the resin molded body 130 and the thicknesses (in other words, the volume resistances) of the lower insulating plate 112 and the upper insulating plate 116.

Namely, when focusing between the flange portion 111B of the metal shell 111 and the lower electrode plate 113, the phenomenon where the insulation resistance of the knocking sensor 101 is lowered by a temperature rise is caused by at least one of a situation where the lower insulating plate 112 itself functions as a conduction path (the conduction path extends inside the lower insulating plate 112 in the thickness direction), and where the inner surface of the resin molded body 130 (more specifically, the surface which is in the inner surface of the resin molded body 130, and which is in contact with the lower insulating plate 112) functions as a conduction path. The resin molded body 130 is molded to be thick, and hence its surface functions as a conduction path. Therefore, the insulation characteristics of the resin molded body 130 are largely affected by the surface resistance.

Here, since the resin molded body 130 covers the sensor body 110, the member is requested to have moldability. Furthermore, the molding must be performed within a limited size range of the size as the knocking sensor 101. Therefore, a range of selection of the resin material, and a range of setting of the shape and dimensions of the resin material are limited, so that it is not easy to increase the surface resistance of the resin molded body 130. In order to enable the knocking sensor 101 to be used under high temperature conditions of 150°C, therefore, it is important that the surface resistance of the resin molded body 130 itself is increased at a high temperature, and the surface resistance of the resin molded body 130 in the knocking sensor 101 is raised.

As the materials of the lower insulating plate 112 and the upper insulating plate 116, polyethylene terephthalate (hereinafter, referred to as "PET") or polybutylene terephthalate (hereinafter, referred to as "PBT") is usually used. However, as described above, even if a material which exhibits a high surface resistance also at a high temperature is used as the material of the resin molded body 130, when PET, PET, or the like is used as the materials of the lower insulating plate 112 and the upper insulating plate 116, the sensor capacitance of the knocking sensor 101 is varied under high temperature conditions, thereby causing a problem in that it deviates from a prescribed range.

In the lower insulating plate 112 and the upper insulating plate 116, when the temperature is raised, PET, PET, or the like which is used as the material thereof decomposes, thereby causing the dielectric constants of the lower insulating plate 112 and the upper insulating plate 116 to be increased. A sensor capacitance C of the knocking sensor 101 is obtained in accordance with the following expression where a capacitance of the piezoelectric element 114 is indicated by Ce, a capacitance of the lower insulating plate 112 is indicated by Cb, and a capacitance of the upper insulating plate 116 is indicated by Ca.

$$[0015] \quad C = Ce + 1/\{(1/Ca) + (1/Cb)\}$$

Therefore, when the dielectric constants of the lower insulating plate 112 and the upper insulating plate 116 are raised and the capacitances of the lower insulating plate 112 and the upper insulating plate 116 are increased, the sensor capacitance of the knocking sensor 101 is also increased. In other words, when the dielectric constants of the lower insulating plate 112 and the upper insulating plate 116 are disturbed, also the sensor capacitance of the knocking sensor 101 is disturbed, thereby causing a problem in that the accuracy of detection of knocking which may occur in the internal combustion engine is lowered.

Accordingly, the invention has been conducted in order to solve the above-discussed problems. It is an object of the invention to provide a knocking sensor which, even at an operating temperature of 150°C or higher, exhibits satisfactory insulation characteristics and excellent knocking detecting characteristics.

**Means for Solving the Problems**

In order to solve the above-described problems, the present invention provides the following means.

The knocking sensor of the present invention includes: a sensor body including, a metal shell including a tubular portion which is formed in a cylindrical shape, and a flange portion which extends from one end portion of the tubular portion toward a radially outward side, an annular piezoelectric element in which the tubular portion is passed through a through hole thereof, an annular weight in which the tubular portion is passed through a through hole thereof and which is placed so as to sandwich the piezoelectric element with the flange portion, a flange portion-side electrode plate which is placed between the piezoelectric element and the flange portion, a weight-side electrode plate which is placed between the piezoelectric element and the weight, a flange portion-side insulating plate which is placed between the flange portion and the flange portion-side electrode plate and which electrically insulates the flange portion from the flange portion-side electrode plate, and a weight-side insulating plate which is placed between the weight and the weight-side electrode plate and which electrically insulates the weight from the weight-side electrode plate; and a resin molded body which is made of a resin and which covers the sensor body, and wherein the flange portion-side insulating plate and the weight-side insulating plate are made of a resin that does not contain ester bond, characterized in that the resin molded body is made of polyphenylene sulfide.

According to the knocking sensor of the invention, polyphenylene sulfide (hereinafter, referred to as "PPS") is used as the material of the resin molded body, and a resin that does not contain ester bond is used as the materials of the flange portion-side insulating plate and the weight-side insulating plate. A resin that does not contain ester bond hardly decomposes at a high temperature (for example, 150°C) as compared with a resin containing ester bond. Therefore, the flange portion-side insulating plate and the weight-side insulating plate, which are made of a resin that does not contain ester bond, hardly change in characteristics such as the dielectric constant and the thickness even at a high temperature, as compared with a flange portion-side insulating plate and a weight-side insulating plate which are made of a resin containing ester bond. In the knocking sensor of the invention, consequently, a change of the sensor capacitance due to the temperature is suppressed, and decrease in the accuracy of detection of knocking is suppressed.

Moreover, PPS has a high surface resistivity at an ordinary temperature (for example, room temperature), and exhibits a surface resistivity of $1.0 \times 10^{10} \, \Omega$ (or $\Omega/q$) or higher at 150°C. Therefore, in the knocking sensor of the invention, deterioration of the insulation characteristics can be suppressed even at an operating temperature of 150°C or higher.

As the resin that does not contain ester bond, preferably useful are PPS (including PPS which is filler-reinforced by glass fibers), polytetrafluoroethylene (hereinafter, referred to as "PTFE"), polyether sulfon (hereinafter, referred to as "PES"), polyether ether ketone (hereinafter, referred to as "PEEK"), and a resin having a melting point of 250°C or higher.

In the above-described invention, it is preferable that at least the weight-side insulating plate is made of a resin which is higher in density than a nylon resin.

When the material of the weight-side insulating plate is a resin which is higher in density than a nylon resin that is conventionally used as the material of the weight-side insulating plate, such as nylon 66 (hereinafter, referred to as "PA66"), the weight of the weight-side insulating plate can be increased without changing the volume thereof. The weight-side insulating plate is placed on the side of the weight, i.e., on the upper side with respect to the piezoelectric element, and therefore functions in a similar manner as the weight which enhances the output of the knocking sensor. That is, when the weight of the weight-side insulating plate is increased, the output can be increased without increasing the size of the knocking sensor.

Not only the weight-side insulating plate in which a resin that is higher in density than a nylon resin is used as a material thereof, but also the flange portion-side insulating plate may use a resin that is higher in density than a nylon resin as a material thereof. According to the configuration, the flange portion-side insulating plate and the weight-side insulating plate can be commonalized. Therefore, the number of kinds of components constituting the knocking sensor can be reduced, and the production cost can be lowered.

In the above-described invention, it is preferable that the flange portion-side insulating plate and the weight-side insulating plate are made of polyphenylene sulfide.

When the materials of the flange portion-side insulating plate and the weight-side insulating plate are chosen to be PPS, which is the same as the material of the resin molded body, the insulation resistances of the flange portion-side insulating plate and the weight-side insulating plate at ordinary temperature can be set to a high value, and the insulation resistances can be prevented from being lowered when the temperature rises.

In the above-described invention, it is preferable that the resin molded body is disposed to be in direct contact with portions of the flange portion-side insulating plate and the weight-side insulating plate which are exposed from the sensor body.

According to the knocking sensor of the invention, the portions (outer surfaces) of the flange portion-side insulating plate and the weight-side insulating plate which are exposed from the sensor body and the resin molded body are contacted with each other without interposition of an air layer. Therefore, even in a case where a phenomenon where an excess voltage is applied between the metal shell and the flange portion-side insulating plate or the weight-side insulating plate occurs, a discharge does not occur through an air layer, and the insulation characteristics between the metal shell and the flange portion-side insulating plate or the weight-side insulating plate can be further ensured. In the case where the flange portion-side insulating plate and the weight-side insulating plate are made of polyphenylene sulfide, the resin molded body and the both insulating plates are configured by the same material, and their coefficients of thermal expansion are coincide with one another. Therefore, even in a case where a temperature change occurs in the knocking sensor, it is possible to maintain the contact state between the portions (outer surfaces) of the flange portion-side insulating plate and the weight-side insulating plate which are exposed from the sensor body and the resin molded body. Consequently, the configuration is more preferable from the viewpoint of insulation characteristics.

## Effects of the Invention

According to the knocking sensor of the invention, the resin molded body is formed by polyphenylene sulfide, and the flange portion-side insulating plate and the weight-side insulating plate are formed by a resin that does not contain ester bond. Therefore, the flange portion-side insulating plate and the weight-side insulating plate hardly change in characteristics such as the dielectric constant and the thickness even at a high temperature. Therefore, the invention attains an effect in which, even at an operating temperature of 150°C or higher, the insulation characteristics are satisfactory, and excellent knocking detecting characteristics are realized.

## Brief Description of the Drawings

Fig. 1 is a sectional view illustrating a configuration of a knocking sensor of an embodiment of the invention, taken along an axial direction.
Fig. 2 is an exploded view illustrating a configuration of a sensor body in Fig. 1.
Fig. 3 is a graph showing an insulation resistance of the knocking sensor at 150°C.
Fig. 4 is a graph showing surface resistivities of various resins.
Fig. 5 is a table in which changes of capacitance were evaluated in a test in which knocking sensors were stored in a high temperature environment.
Fig. 6 is a sectional view illustrating the configuration of a conventional knocking sensor, taken along an axial direction.
Fig. 7 is an exploded view illustrating a configuration of a sensor body in Fig. 6.

## Mode for Carrying Out the Invention

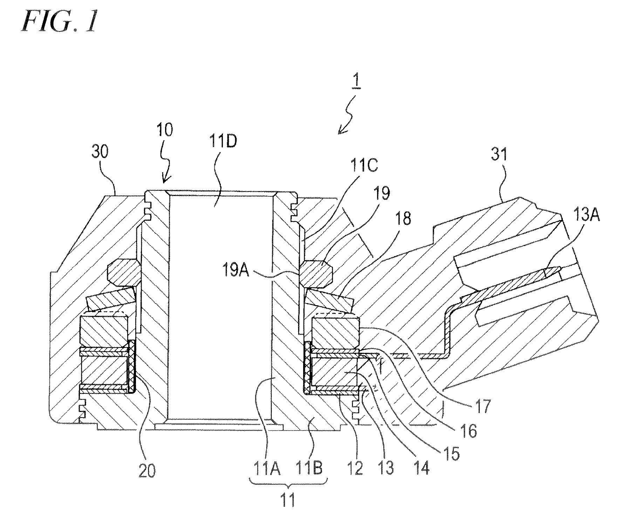

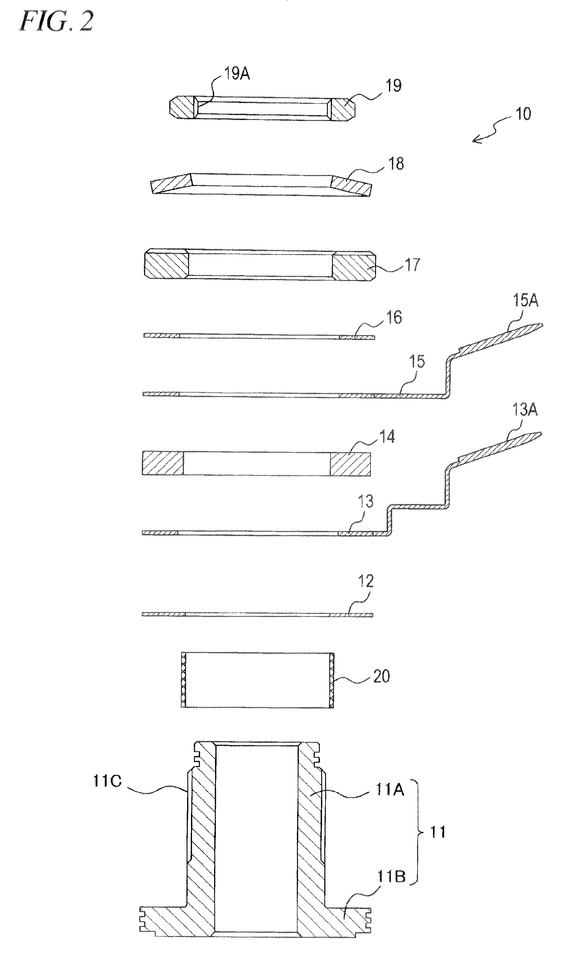

A knocking sensor 1 of an embodiment of the invention will be described with reference to Figs. 1 to 5. Fig. 1 is a sectional view illustrating the configuration of the knocking sensor 1 of the embodiment, and Fig. 2 is an exploded view illustrating the configuration of a sensor body 10 in Fig. 1.

The knocking sensor 1 of the embodiment senses an occurrence of knocking in an internal combustion engine. The knocking sensor 1 is a so-called center-hole type non-resonance knocking sensor which, as shown in Fig. 1, has a mounting hole 11D, which is used when the knocking sensor is mounted on a cylinder block of the internal combustion engine, in a center portion thereof.

The knocking sensor 1 is configured by covering the sensor body 10, which will be described later in detail, by a resin molded body 30, and is configured as a short cylindrical shape as a whole. Moreover, a connector portion 31 is formed to project toward the radially outward side from a part of the outer circumferential surface of the knocking sensor 1 which is formed in a cylindrical shape. A first terminal 13A and a second terminal 15A, which extend respectively from a lower electrode plate 13 and an upper electrode plate 15, are placed inside the connector portion 31 (in Fig. 1, only the first terminal 13A is shown). The connector portion 31 is to be connected with an external connector which is not shown.

As shown in the exploded view of Fig. 2, the knocking sensor 1 mainly has a metal shell 11 which is made of metal and which has a tubular portion 11 A and an annular flange portion 11B that is formed in the lower end of the tubular portion 11A. Further, the knocking sensor 1 mainly has an lower insulating plate (flange portion-side insulating plate) 12, a lower electrode plate (flange portion-side electrode plate) 13, a piezoelectric element 14, an upper electrode plate (weight-side electrode plate) 15, an upper insulating plate (weight-side insulating plate) 16, a weight 17, and a disc spring 18, each of which are formed in an annular shape. A through hole through which the tubular portion 11 A passes is formed in a center of each of the lower insulating plate 12, the lower electrode plate 13, the piezoelectric element 14, the upper electrode plate 15, the upper insulating plate 16, the weight 17, and the disc spring 18. On the outer circumference of the tubular portion 11 A, the lower insulating plate 12, the lower electrode plate 13, the piezoelectric element 14, the upper electrode plate 15, the upper insulating plate 16, the weight 17, and the disc spring 18 are sequentially stacked in this order from the side of the flange portion 11B. The lower insulating plate 12 which is placed closest to the flange portion 11B is placed directly on the flange portion 11B.

An external thread portion 11C is formed on an upper portion of the outer circumferential surface of the tubular portion 11A of the metal shell 11. By contrast, an internal thread portion 19A adapted to mate with the external thread portion 11C is formed on the inner surface of a nut 19. When the internal thread portion 19A of the nut 19 mates with the external thread portion 11C of the tubular portion 11A and the nut 19 is rotated, the nut 19 advances toward the flange portion 11B. The lower insulating plate 12, the lower electrode plate 13, the piezoelectric element 14, the upper electrode plate 15, the upper insulating plate 16, the weight 17, and the disc spring 18 are pressed by the nut 19 against the flange portion 11B of the metal shell 11 to be fixed thereto. As described above, the sensor body 10 is configured by the lower insulating plate 12, the lower electrode plate 13, the piezoelectric element 14, the upper electrode plate 15, the upper insulating plate 16, the weight 17, the disc spring 18, and the nut 19, which are fixed to the metal shell 11.

An insulation sleeve 20 which is formed in a cylindrical shape is placed between the outer circumferential surface of the tubular portion 11A, and the lower insulating plate 12, the lower electrode plate 13, the piezoelectric element 14, the upper electrode plate 15 and the upper insulating plate 16. The insulation sleeve 20 prevents the lower electrode plate 13, the piezoelectric element 14, and the upper electrode plate 15 from being electrically connected (contacted) with the tubular portion 11 A.

The lower insulating plate 12 is a member which is placed between the flange portion 11B of the metal shell 11 and the lower electrode plate 13 to prevent an electrical connection (conduction) between the flange portion 11B and the lower electrode plate 13. Similarly, the upper insulating plate 16 is a member which is placed between the upper electrode plate 15 and the weight 17 to prevent an electrical connection (conduction) between the upper electrode plate 15 and the weight 17. The embodiment will be described by an example in which the upper insulating plate 16 and the lower insulating plate 12 are formed by PPS. As the material composing the upper insulating plate 16 and the lower insulating plate 12, preferably, a resin (for example, PPS, PTFE, PES, PEEK, or the like) that does not contain ester bond is used, and more preferably, a resin which is higher in density than a nylon resin is used.

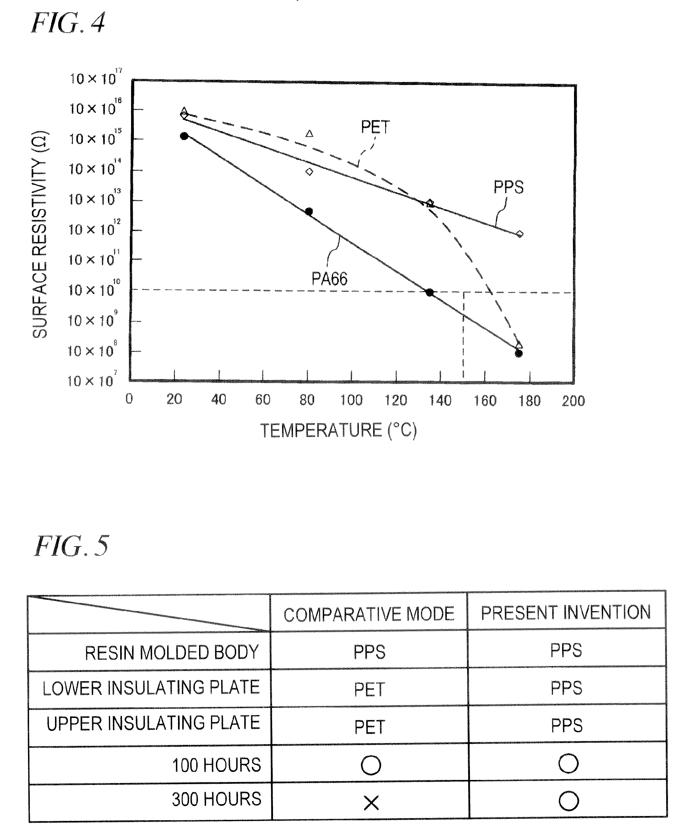

The resin molded body 30 is configured by PPS which is excellent in moldability. PPS has a surface resistivity of $1.0 \times 10^{10}$ $\Omega$ or higher at 150°C, and exhibits a surface resistivity of $1.0 \times 10^{10}$ $\Omega$ or higher at 180°C (see Fig. 4 which will be described later). When the resin molded body 30 is composed by PPS, therefore, the insulation resistance of the knocking sensor 1 can be prevented from being lowered even in the case where the sensor is exposed to a high temperature of 150°C or higher. The resin molded body 30 is formed by injection molding. In the embodiment, conditions and the like of the injection molding are adequately set so that the resin molded body 30 is disposed to be in direct contact with portions which are exposed to the outside of the sensor body 10 among the lower insulating plate 12 and upper insulating plate 16 composed by a resin (specifically, PPS) that does not contain ester bond. For example, the resin molded body 30 is disposed so as to be in direct contact with the outer circumferential surfaces of the lower insulating plate 12 and the upper insulating plate 16.

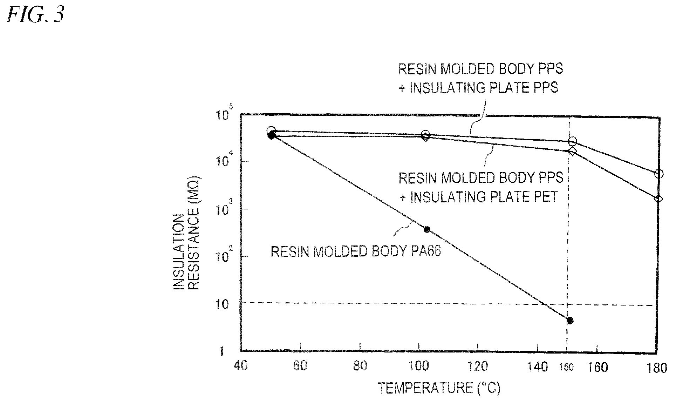

Fig. 3 shows results of measurements of insulation resistances of knocking sensors 1 which were produced so as to have resin molded bodies 30 composed by various resin materials. As the upper insulating plate 16 and the lower insulating plate 12, plates composed by PET having a thickness of 0.35 mm, an inner diameter of 14.72 mm, and an outer diameter of 23.10 mm were used.

With respect to the insulation resistance at 150°C, first, a knocking sensor in which a conventional nylon resin (PA66) is used as the resin molded body 30 (the graph indicated by • in Fig. 3) showed a resistance lower than 10 M$\Omega$, and knocking sensors in which PPS according to the invention is used as the resin molded body 30 (the graphs indicated by $\bigcirc$ and $\diamond$ in Fig. 3) showed a resistance of 10 M$\Omega$ or higher.

In the knocking sensors in which PPS according to the invention is used as the resin molded body 30, the sensor in which PET is used as the upper insulating plate 16 and the lower insulating plate 12 (the graph indicated by $\diamond$ in Fig. 3), and the sensor in which PPS is used (the graph indicated by $\bigcirc$ in Fig. 3, and representing this embodiment) are compared with each other. When the temperature exceeds 150°C and reaches 180°C, the knocking sensor 1 of the embodiment in which the upper insulating plate 16 and the lower insulating plate 12 are formed by PPS has a higher insulation resistance than that of the sensor in which the upper insulating plate 16 and the lower insulating plate 12 are formed by PET. In other words, the reduction degree of the insulation resistance due to the temperature rise is smaller.

Fig. 4 shows surface resistivities of various resins. In the case of a nylon resin (PA66 in Fig. 4) in which the insulation resistance is lower than 10 M$\Omega$, the surface resistivity at 150°C was lower than $1.0 \times 10^{10}$ $\Omega$. By contrast, in the case of polyphenylene sulfide (PPS in Fig. 4) in which the insulation resistance is equal to or higher than 10 M$\Omega$, the surface resistivity at 150°C was equal to or higher than $1.0 \times 10^{10}$ $\Omega$. From this, it is known that, when a resin molded body in which the surface resistivity at 150°C is equal to or higher than $1.0 \times 10^{10}$ $\Omega$ is used, a knocking sensor can be used at 150°C or higher while maintaining the insulation characteristics.

In the case of PET which is a material that configures the conventional upper insulating plate 116 and the lower insulating plate 112, the surface resistivity was rapidly lowered with rising temperature, and was lower than $1.0 \times 10^{10}$ $\Omega$ at about 160°C. In other words, in PET, the characteristic change due to temperature change, particularly, the characteristic change in a high temperature region of 150°C or higher, is large, as compared to other resins such PA66 and PPS.

The surface resistivity was obtained in accordance with JIS K6911. and was obtained by forming a bulk body by the material configuring the resin molded body 30 and preparing a sample in which a plurality of annular electrodes are disposed on the surface of the bulk body.

The insulation resistance between the metal shell 11 and the upper electrode plate 15, the insulation resistance between the metal shell 11 and the lower electrode plate 13, the insulation resistance between the upper electrode plate 15 and the lower electrode plate 13, and the insulation resistance between the upper electrode plate 15 and the weight 17 were measured. The lowest resistance among them was employed as the insulation resistance of a knocking sensor.

Next, a change in the capacitance of the knocking sensor 1 of the embodiment in a case where the materials of the resin molded body 30, the lower insulating plate 12, and the upper insulating plate 16 of the knocking sensor 1 are PPS filler-reinforced by glass fibers will be described. Fig. 5 is a table in which changes of the capacitance were evaluated in a test in which the knocking sensor 1 of the embodiment and a knocking sensor of a comparative mode were stored in an environment of a high temperature of 200°C.

The knocking sensor of the comparative mode is different from the knocking sensor 1 of the embodiment in that the materials of the lower insulating plate 12 and the upper insulating plate 16 are PET. Meanwhile, the other components including the resin molded body are identical in material and shape with those of the knocking sensor 1 of the embodiment.

In the evaluation, a determination of pass (○ in the table) or fail (× in the table) is performed based on, by using a capacitance of the knocking sensor before storing the sensor in a high temperature environment as a reference, whether an amount of change of the capacitance of the knocking sensor after storing the sensor in the high temperature environment with respect to the reference exceeds ±10% or not. Namely, if the change amount is within ±10%, pass (○) is determined, and, if exceeding ±10%, fail (X) is determined.

In a case where the knocking sensor of the comparative mode and the knocking sensor 1 of the embodiment (in Fig. 5, indicated by "Present Invention") were stored in an environment of a high temperature of 200°C for 100 hours, the change amount of the capacitance was within ±10% with respect to the reference and a pass (○) was determined both in the knocking sensor of the comparative mode and the knocking sensor 1 of the embodiment. By contrast, in the case where the time period when the knocking sensors were stored in the high temperature environment was lengthened to 300 hours, the change amount of the capacitance exceeded ±10% with respect to the reference and fail (×) was determined in the conventional knocking sensor, but the change amount remained within ±10% and a pass (○) was determined in the knocking sensor 1 of the embodiment.

According to the knocking sensor 1 configured as described above, PPS is used as the material of the resin molded body 30, and PPS which is a resin that does not contain ester bond is used as the materials of the lower insulating plate 12 and the upper insulating plate 16. Therefore, in the knocking sensor 1 of the embodiment, a change of the sensor capacitance due to the temperature can be suppressed, and a decrease in the accuracy of detection of knocking can be suppressed. Specifically, a resin that does not contain ester bond hardly decomposes at a high temperature (for example, 150°C) as compared with a resin containing ester bond. Therefore, the lower insulating plate 12 and upper insulating plate 16, which are made of a resin that does not contain ester bond, hardly change in characteristics such as the dielectric constant and the thickness even at a high temperature, as compared with the lower insulating plate 12 and upper insulating plate 16 which are made of a resin containing ester bond. In the knocking sensor 1 of the embodiment, consequently, a decrease in the accuracy of detection of knocking can be suppressed.

Moreover, PPS configuring the resin molded body 30, the lower insulating plate 12, and the upper insulating plate 16 has a high surface resistivity at an ordinary temperature (for example, room temperature), and exhibits a surface resistivity of $1.0 \times 10^{10}$ Ω (or Ω/q) or higher at 150°C. Therefore, in the knocking sensor 1 of the embodiment, deterioration of the insulation characteristics can be suppressed even at an operating temperature of 150°C or higher.

When the material of the upper insulating plate 16 is PPS which is a resin that is higher in density than a nylon resin such as PA66 that is conventionally used as the material of the upper insulating plate 16, the weight of the upper insulating plate 16 can be increased without changing the volume thereof. The upper insulating plate 16 is placed on the side of the weight 17, i.e., on the upper side with respect to the piezoelectric element 14, and therefore functions in a similar manner as the weight 17 which enhances the output of the knocking sensor 1. That is, when the weight of the upper insulating plate 16 is increased, the output can be increased without increasing the size of the knocking sensor 1.

Not only the upper insulating plate 16 in which PPS is used as a material thereof, but also the lower insulating plate 12 may use PPS as a material thereof. According to the configuration, the lower insulating plate 12 and the upper insulating plate 16 can be commonalized. Therefore, the number of kinds of components constituting the knocking sensor 1 can be reduced, and the production cost can be lowered.

When the materials of the lower insulating plate 12 and the upper insulating plate 16 are chosen to be PPS, which is the same as the material of the resin molded body 30, the insulation resistances of the lower insulating plate 12 and the upper insulating plate 16 at ordinary temperature can be set to a high value, and the insulation resistances can be prevented from being lowered when the temperature rises.

In the embodiment, the resin molded body 30 made of PPS is disposed to be in direct contact with portions (outer surfaces) which are exposed from the sensor body among the lower insulating plate 12 and upper insulating plate 16 composed by a resin (specifically, PPS) that does not contain ester bond. Therefore, in the knocking sensor 1 of the embodiment, the outer surfaces (mainly the side surfaces) of the lower insulating plate 12 and the upper insulating plate 16 and the resin molded body 30 are contacted with each other without interposition of an air layer. Therefore, even in a case where a phenomenon where an excess voltage is applied between the metal shell 11 and the lower insulating plate 12 or the upper insulating plate 16 accidentally occurs, a discharge does not occur through an air layer, and the insulation characteristics between the metal shell 11 and the lower insulating plate 12 or the upper insulating plate 16 can be further ensured.

It is a matter of course that the invention is not limited to the above-described embodiment, and includes various modifications and equivalents falling within the spirit and scope of the invention. For example, although the above-described embodiment employs the configuration where the weight 17 is held by using the nut 19 and the disc spring 18, the disc spring 18 may be omitted, and the holding may be performed only by the nut 19. Furthermore, the nut 19 may be omitted by using a single member in which the weight 17 and the nut 19 are integrated with each other, or in other words, by using a weight 17 in which an internal thread portion 19A is formed on the inner circumferential surface thereof.

It is not necessary to fix the nut 19 to the metal shell 11 by mating, and the nut may also be fixed to an upper portion of the metal shell 11 by welding. Although the above-described embodiment employs the configuration where the connector portion 31 is integrated with the resin molded body 30, the connector portion 31 may be separated from the resin molded body, and the output of the piezoelectric element 14 may be taken out from the separated connector portion 31 by connecting the resin molded body 30 and the connector portion 31 with each other through a cable.

**Description of Reference Numerals and Signs**

1       Knocking sensor,
10      Sensor body,
11      Metal shell,
11A     Tubular portion,
11B     Flange portion,
12      Lower insulating plate (flange portion-side insulating plate),
13      Lower electrode plate (flange portion-side electrode plate),
14      Piezoelectric element,
15      Upper electrode plate (weight-side electrode plate),
16      Upper insulating plate (weight-side insulating plate),
17      Weight,
30      Resin molded body

**Claims**

1.  A knocking sensor comprising:

    a sensor body (10) including,
    a metal shell (11) including a tubular portion (11A) which is formed in a cylindrical shape, and
    a flange portion (11B) which extends from one end portion of the tubular portion (11A) toward a radially outward side,
    an annular piezoelectric element (14) in which the tubular portion (11A) is passed through a through hole thereof,
    an annular weight (17) in which the tubular portion is passed through a through hole thereof and which is placed so as to sandwich the piezoelectric element (14) with the flange portion (11B),
a flange portion-side electrode plate (13) which is placed between the piezoelectric element (14) and the flange portion (11B),
a weight-side electrode plate (16) which is placed between the piezoelectric element (14) and said annular weight (17),
a flange portion-side insulating plate (12) which is placed between the flange portion (11B) and the flange portion-side electrode plate (13) and which electrically insulates the flange portion (11B) from the flange portion-side electrode plate (13), and
a weight-side insulating plate (16) which is placed between said annular weight (17) and the weight-side electrode plate (15) and which electrically insulates said annular weight (17) from the weight-side electrode plate (15); and
a resin molded body (30) which is made of a resin and which covers the sensor body (10), and

    wherein the flange portion-side insulating plate (12) and the weight-side insulating plate (16) are made of a resin that does not contain ester bond, **characterized in that** the resin molded body (30) is made of polyphenylene sulfide.

2.  The knocking sensor according to claim 1,
    wherein at least the weight-side insulating plate is made of a resin which is higher in density than a nylon resin.

3.  The knocking sensor according to claim 1 or 2,
    wherein the flange portion-side insulating plate and the weight-side insulating plate are made of polyphenylene sulfide.

4.  The knocking sensor according to any one of claims 1 to 3,
    wherein the resin molded body is disposed to be in direct contact with portions of the flange portion-side insulating plate and the weight-side insulating plate which are exposed from the sensor body.

**Patentansprüche**

1.  Klopfsensor, der umfasst:

    einen Sensor-Körper (10), der enthält:

    eine Metallhülse (11), die einen röhrenförmigen Abschnitt (11A), der in einer zylindrischen Form ausgebildet ist, sowie einen Flanschabschnitt (11 B) enthält, der sich von einem Endabschnitt des röhrenförmigen Abschnitts (11A) aus zu einer radial außen liegenden Seite hin erstreckt,
ein ringförmiges piezoelektrisches Element (14), wobei der röhrenförmige Abschnitt (11A) durch ein Durchgangsloch desselben hindurchgeführt ist,
ein ringförmiges Gewicht (17), wobei der röhrenförmige Abschnitt durch ein Durchgangsloch desselben hindurchgeführt ist, und es so positioniert ist, dass das piezoelektrische Element (14) mit dem Flanschabschnitt (11B) eingeschlossen wird,
eine Elektrodenplatte (13) an der Seite des Flanschabschnitts, die zwischen dem piezoelektrischen Element (14) und dem Flanschabschnitt (11 B) positioniert ist,
eine Elektrodenplatte (16) an der Seite des Gewichtes, die zwischen dem piezoelektrischen Element (14) und dem ringförmigen Gewicht (17) positioniert ist,
eine isolierende Platte (12) an der Seite des Flanschabschnitts, die zwischen dem Flanschabschnitt (11 B) und der Elektrodenplatte (13) an der Seite des Flanschabschnitts positioniert ist und die den Flanschabschnitt (11 B) elektrisch von der Elektrodenplatte (13) an der Seite des Flanschabschnitts isoliert, sowie
eine isolierende Platte (16) an der Seite des Gewichtes, die zwischen dem ringförmigen Gewicht (17) und der Elektrodenplatte (15) an der Seite des Gewichtes positioniert ist und die das ringförmige Gewicht (17) elektrisch von der Elektrodenplatte (15) an der Seite des Gewichtes isoliert; sowie
einen aus Kunststoff geformten Körper (3), der aus einem Kunststoff besteht und der den Sensor-Körper (10) abdeckt, und wobei die isolierende Platte (12) an der Seite des Flanschabschnitts und die isolierende Platte (16) an der Seite des Gewichtes aus einem Kunststoff bestehen, der keine Esterbindung enthält,

**dadurch gekennzeichnet, dass**
der aus Kunststoff geformte Körper (30) aus Polyphenylensulfid besteht.

2. Klopfsensor nach Anspruch 1, wobei wenigstens die isolierende Platte an der Seite des Gewichtes aus einem Kunststoff besteht, der höhere Dichte hat als ein Nylon-Kunststoff.

3. Klopfsensor nach Anspruch 1 oder 2, wobei die isolierende Platte an der Seite des Flanschabschnitts und die isolierende Platte an der Seite des Gewichtes aus Polyphenylensulfid bestehen.

4. Klopfsensor nach einem der Ansprüche 1 bis 3, wobei der aus Kunststoff geformte Körper so angeordnet ist, dass er in direktem Kontakt mit Abschnitten der isolierenden Platte an der Seite des Flanschabschnitts und der isolierenden Platte an der Seite des Gewichtes ist, die aus dem Sensor-Körper freiliegen.

**Revendications**

1. Un capteur de cliquetis, comprenant :

   un corps de capteur (10) incluant,
   une enveloppe métallique (11) incluant une partie tubulaire (11A) qui est formée dans une forme cylindrique, et une partie de bride (11 B) qui s'étend à partir d'une partie d'extrémité de la partie tubulaire (11A) vers un côté radialement vers l'extérieur,
   un élément piézoélectrique annulaire (14) avec un trou traversant à travers lequel est passée la partie tubulaire (11A),
   un poids annulaire (17) avec un trou traversant à travers lequel est passée la partie tubulaire et qui est placé de manière à prendre en sandwich l'élément piézoélectrique (14) avec la partie de bride (11 B),
   une plaque de d'électrode de côté partie de bride (13) qui est placée entre l'élément piézoélectrique (14) et la partie de bride (11 B),
   une plaque d'électrode de côté poids (15) qui est placée entre l'élément piézoélectrique (14) et ledit poids annulaire (17),
   une plaque isolante de côté partie de bride (12) qui est placée entre la partie de bride (11B) et la plaque d'électrode de côté partie de bride (13) et qui isole électriquement la partie de bride (11 B) de la plaque d'électrode de côté partie de bride (13), et
   une plaque isolante de côté poids (16) qui est placée entre ledit poids annulaire (17) et la plaque d'électrode de côté poids (15) et qui isole électriquement ledit poids annulaire (17) de la plaque d'électrode de côté poids (15) ; et

   un corps moulé en résine (30) qui est fait d'une résine et qui couvre le corps de capteur (10), et dans lequel la plaque isolante de côté partie de bride (12) et la plaque isolante de côté poids (16) sont faites d'une résine qui ne contient pas de liaison ester,
   **caractérisé en ce que**
   le corps moulé en résine (30) est fait de sulfure de polyphénylène.

2. Le capteur de cliquetis selon la revendication 1, dans lequel au moins la plaque isolante de côté poids est faite d'une résine qui a une densité plus élevée qu'une résine de nylon.

3. Le capteur de cliquetis selon la revendication 1 ou 2, dans lequel la plaque isolante de côté partie de bride et la plaque isolante de côté poids sont faites de sulfure de polyphénylène.

4. Le capteur de cliquetis selon l'une quelconque des revendications 1 à 3,
dans lequel le corps moulé en résine est disposé pour être en contact direct avec des parties de la plaque isolante de côté partie de bride et la plaque isolante de côté poids qui sont exposées du corps de capteur.

FIG. 1

*FIG. 2*

*FIG. 3*

RESIN MOLDED BODY PPS
+ INSULATING PLATE PPS

RESIN MOLDED BODY PPS
+ INSULATING PLATE PET

RESIN MOLDED BODY PA66

INSULATION RESISTANCE (MΩ)

TEMPERATURE (°C)

## FIG. 4

## FIG. 5

| | COMPARATIVE MODE | PRESENT INVENTION |
|---|---|---|
| RESIN MOLDED BODY | PPS | PPS |
| LOWER INSULATING PLATE | PET | PPS |
| UPPER INSULATING PLATE | PET | PPS |
| 100 HOURS | ○ | ○ |
| 300 HOURS | ✕ | ○ |

FIG.6

*FIG. 7*

**REFERENCES CITED IN THE DESCRIPTION**

**Patent documents cited in the description**

- JP 2003322580 A
- JP 2008144677 A
- JP 2004251792 A